# EUROPEAN PATENT SPECIFICATION

(11) **EP 2 784 533 B1**
(45) Date of publication and mention of the grant of the patent: **30.12.2020**
(21) Application number: 12852405.5
(22) Date of filing: 21.08.2012
(51) Int. Cl.: G01S 19/53, H01Q 1/12, H01Q 1/24, H04B 7/08, G01S 19/14

(54) **METHOD AND DEVICE FOR ACQUIRING INFORMATION ABOUT BASE STATION ANTENNA, AND BASE STATION ANTENNA**
VERFAHREN UND VORRICHTUNG ZUR ERFASSUNG VON INFORMATIONEN ÜBER EINE BASISSTATIONSANTENNE UND BASISSTATIONSANTENNE
PROCÉDÉ ET DISPOSITIF D'ACQUISITION D'INFORMATIONS CONCERNANT UNE ANTENNE DE STATION DE BASE, ET ANTENNE DE STATION DE BASE

(30) Priority: 21.11.2011 CN 201110370910
(43) Date of publication of application: 01.10.2014
(73) Proprietor: Huawei Technologies Co., Ltd., Longgang District Shenzhen, Guangdong 518129 (CN)
(72) Inventor: ZHAO, Hu, Shenzhen Guangdong 518129 (CN); WU, Lichang, Shenzhen Guangdong 518129 (CN)
(74) Representative: Epping - Hermann - Fischer
(86) International application number: PCT/CN2012/080400
(87) International publication number: WO 2013/075520

(56) References cited:
- EP-A1- 2 196 817
- EP-A2- 1 464 981
- CN-A- 101 446 634
- CN-A- 102 170 321
- CN-A- 102 509 902
- DE-U1-202005 019 697
- US-A- 5 347 286
- US-A- 5 349 531
- US-A1- 2003 201 947
- US-A1- 2005 200 522
- US-A1- 2009 201 203

## Description

### FIELD OF THE INVENTION

Embodiments of the present invention relate to the field of communication technologies, and in particular, to a method and an apparatus for acquiring information about a base station antenna, and the base station antenna.

### BACKGROUND OF THE INVENTION

After a base station antenna is deployed, engineering parameter information of the existing antenna, such as geographical location, mounting height, mechanical azimuth, and mechanical downtilt of the base station antenna, is generally collected manually to facilitate maintenance and network optimization of the antenna. Based on the engineering parameter information, operations, such as network management and coverage performance analysis and adjustment, may be implemented.

However, the engineering parameter information of the existing base station antenna is collected by an engineer using an external device on site. The manual collection has disadvantages such as low efficiency, poor real-time performance, high cost, and low accuracy, and the external device being easy to be influenced by factors such as a surrounding magnetic field and an atmospheric environment.

US2003/201947A1 discloses a method of aligning an antenna within a predetermined azimuth direction, in which the antenna is hingeably connected to a support. In response to processed positioning data received by a first global positioning system receiver dish from a global positioning satellite system, the first receiver dish being connected to the antenna and locatable at predetermined first and second positions away from the antenna, the first receiver dish determines an antenna azimuth direction and is moved from the antenna azimuth direction towards the predetermined azimuth direction so as to align the antenna.

US2009/201203A1 discloses an antenna alignment and monitoring system which is provided for telecom antennas and includes a pair of global navigation satellite system (GNSS) antennas mounted on a printed circuit board (PCB) for installation in a telecom antenna enclosure. Multiple telecom antennas are configured in an antenna array for mounting on a transmission tower or other elevated structure. A common GNSS receiver cycles among the GNSS antenna pairs for initially aligning and subsequently monitoring the azimuth alignment of the telecom antennas relative to a reference azimuth using GNSS triangulation.

EP2196817A1 relates to an antenna measurement system on a telecommunications system for measuring antenna state variables comprising: an antenna at a first location, the antenna comprising a first position and a second position; a first navigation satellite receiver at the first position of the antenna adapted for measuring a first antenna coordinate; a second navigation satellite receiver at the second position of the antenna adapted for measuring a second antenna coordinate; a transmitter adapted for transmitting information related to the first and second antenna coordinates from the first and second satellite based navigation receiver; a processor adapted for calculating at least one of an azimuth angle and a tilt angle of the antenna using at least the first and the second antenna coordinate.

### SUMMARY OF THE INVENTION

The objective of the embodiments of the present invention is to provide a method and an apparatus for acquiring information about a base station antenna, and the base station antenna to improve the accuracy and convenience of acquiring information about the base station antenna.

The scope of the invention is defined by the independent claims.

The objective of the embodiments of the present invention is achieved by the following technical solutions:
On one aspect, an embodiment of the present invention provides an apparatus for acquiring information about a base station antenna, wherein the apparatus is integrated with the base station antenna, including:
at least two receiving antenna units, configured to receive satellite signals sent by a satellite in a satellite positioning system, where the receiving antenna units and the base station antenna accord with a preset position relationship; and
a processing unit, configured to obtain position information of the receiving antenna units according to the satellite signals, and to obtain position information of the base station antenna according to the position information of the receiving antenna units and the preset position relationship between the receiving antenna units and the base station antenna.

The preset position relationship comprises: a baseline formed by a connecting line between the at least two receiving antenna units and a normal of the base station antenna have a relationship of a preset included angle, and a value of the preset included angle comprises any angle value ranging from 0 degree to 180 degrees; and the processing unit comprises:
a first processing subunit, configured to obtain carrier phase information, carrier wavelength information, and satellite ephemeris information of the satellite signals by parsing the satellite signals; and
a second processing subunit, configured to obtain an azimuth of the baseline and/or a pitch angle of the baseline according to the carrier phase information, the carrier wavelength information, and the satellite ephemeris information, and to obtain an azimuth of the base station antenna and/or a downtilt of the base station antenna according to the azimuth of the baseline and/or the pitch angle of the baseline and the preset position relationship.

The second processing subunit is specifically configured to:
obtain, according to the carrier phase information and the carrier wavelength information, wave paths from the satellite to the at least two receiving antenna units, and obtain a wave path difference between the at least two receiving antenna units;
obtain, according to the satellite ephemeris information, coordinates of the satellite in the World Geodetic System WGS;
obtain, according to the wave paths from the satellite to the at least two receiving antenna units, the wave path difference, and the coordinates of the satellite in the World Geodetic System WGS, coordinates of the baseline in the World Geodetic System WGS;
convert the coordinates of the baseline in the World Geodetic System WGS to coordinates in the local level system LLS;
obtain, according to the coordinates of the baseline in the local level system LLS, the azimuth of the baseline and/or the pitch angle of the baseline;
obtain, by subtracting the preset included angle value from the azimuth of the baseline, the azimuth of the base station antenna; and
obtain, by subtracting the pitch angle of the baseline from the preset included angle value, the downtilt of the base station antenna.

On another aspect, an embodiment of the present invention provides a method for acquiring information about a base station antenna, including:
receiving, through at least two receiving antenna units, satellite signals sent by a satellite in a satellite positioning system, where the receiving antenna units and the base station antenna accord with a preset position relationship; and
obtaining from a process unit which is integrated with the base station antenna, according to
the satellite signals, position information of the receiving antenna units; and obtaining, according to the position information of the receiving antenna units and the preset position relationship between the receiving antenna units and the base station antenna, position information of the base station antenna.

The preset position relationship comprises: a baseline formed by a connecting line between the at least two receiving antenna units and a normal of the base station antenna have a preset included angle relationship, and a preset included angle value comprises any angle value ranging from 0 degree to 180 degrees; in this case, the obtaining, according to the satellite signals, position information of the baseline, and the obtaining, according to the position information of the baseline and the preset position relationship, the position information of the base station antenna comprises:
obtaining, by parsing the satellite signals, carrier phase information, carrier wavelength information, and satellite ephemeris information of the satellite signals; and
obtaining, according to the carrier phase information, the carrier wavelength information, and the satellite ephemeris information, an azimuth of the baseline and/or a pitch angle of the baseline; and obtaining, according to the azimuth of the baseline and/or the pitch angle of the baseline and the preset position relationship, an azimuth of the base station antenna and/or a downtilt of the base station antenna.

The obtaining, according to the carrier phase information, the carrier wavelength information, and the satellite ephemeris information, the azimuth of the baseline and/or the pitch angle of the baseline comprises:
obtaining, according to the carrier phase information and the carrier wavelength information, wave paths from the satellite to the at least two receiving antenna units, and obtaining a wave path difference between the at least two receiving antenna units;
obtaining, according to the satellite ephemeris information, coordinates of the satellite in the World Geodetic System WGS;
obtaining, according to the wave paths from the satellite to the at least two receiving antenna units, the wave path difference, and the coordinates of the satellite in the World Geodetic System WGS, coordinates of the baseline in the World Geodetic System WGS;
converting the coordinates of the baseline in the World Geodetic System WGS to coordinates in the local level system LLS; and
obtaining, according to the coordinates of the baseline in the local level system LLS, the azimuth of the baseline and/or the pitch angle of the baseline.

The obtaining, according to the azimuth of the baseline and/or the pitch angle of the baseline and the preset position relationship, the azimuth of the base station antenna and/or the downtilt of the base station antenna comprises:
obtaining, by subtracting the preset included angle value from the azimuth of the baseline, the azimuth of the base station antenna; and
obtaining, by subtracting the pitch angle of the baseline from the preset included angle value, the downtilt of the base station antenna.

On another aspect, an embodiment of the present invention provides a base station antenna, including the foregoing apparatus for acquiring information about the base station antenna.

It can be seen from the foregoing technical solutions provided in the embodiment of the present invention that information about the base station antenna is acquired through the satellite signals, thereby avoiding disadvantages of an on-site collection by an engineer using an external device, such as low efficiency, poor real-time performance, high cost, and low accuracy, and the external device being easy to be influenced by factors such as a surrounding magnetic field.

### BRIEF DESCRIPTION OF THE DRAWINGS

To illustrate the technical solutions in the embodiments of the present invention more clearly, the accompanying drawings required for describing the embodiments are briefly introduced in the following. Apparently, the accompanying drawings in the following description are merely some embodiments of the present invention, and persons of ordinary skill in the art can further derive other drawings according to these accompanying drawings without making creative efforts.
FIG. 1 is a schematic structural diagram of an apparatus for acquiring information about a base station antenna according to an embodiment of the present invention;
FIG. 2 is a schematic flow chart of a method for acquiring information about a base station antenna according to an embodiment of the present invention;
FIG. 3 is a first schematic diagram of application of an apparatus for acquiring information about a base station antenna according to an embodiment of the present invention;
FIG. 4 is a second schematic diagram of application of an apparatus for acquiring information about a base station antenna according to an embodiment of the present invention;
FIG. 5 is a schematic flow chart of application of a method for acquiring information about a base station antenna according to an embodiment of the present invention; and
FIG. 6 is a third schematic diagram of application of an apparatus for acquiring information about a base station antenna according to an embodiment of the present invention.

### DETAILED DESCRIPTION OF THE EMBODIMENTS

The technical solutions in the embodiments of the present invention are clearly and completely described in the following with reference to the accompanying drawings in the embodiments of the present invention. Apparently, the embodiments in the following description are merely a part rather than all of the embodiments of the present invention. All other embodiments acquired by persons skilled in the art based on the embodiments of the present invention without making creative efforts shall fall within the protection scope of the present invention.

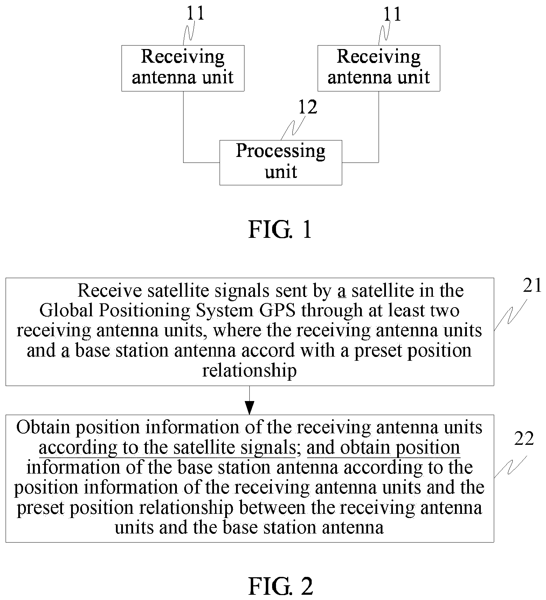

As shown in FIG. 1, an apparatus for acquiring information about a base station antenna according to an embodiment of the present invention includes:
at least two receiving antenna units 11, configured to receive satellite signals sent by a satellite in the Global Positioning System GPS, where the receiving antenna units and the base station antenna accord with a preset position relationship; and
a processing unit 12, configured to obtain position information of the receiving antenna units according to the satellite signals, and to obtain position information of the base station antenna according to the position information of the receiving antenna units and the preset position relationship between the receiving antenna units and the base station antenna.

In this embodiment of the present invention, the GPS satellite positioning system is taken as an example for description, but it is not limited to the GPS and can also be another satellite positioning system.

It can be seen from the foregoing technical solutions provided in the embodiment of the present invention, acquiring information about the base station antenna through the satellite signals does not require an on-site collection of information of the base station antenna by an engineer using an external device, thereby avoiding disadvantages of manual collection such as low efficiency, poor real-time performance, high cost, and low accuracy, and the external device being easy to be influenced by factors such as a surrounding magnetic field and an atmospheric environment.

In the apparatus for acquiring information about the base station antenna according to the embodiment of the present invention, the preset position relationship includes: a baseline formed by a connecting line between the receiving antenna units and a normal of the base station antenna have a preset included angle relationship. A preset included angle value includes any angle value ranging from 0 degree to 180 degrees. Preferentially, the preset value may be 90 degrees or 0 degree.

Persons skilled in the art may learn that the normal of the base station antenna is: an intersecting line between the equatorial plane of the antenna and the meridian plane of the antenna, which may be understood with reference to relevant prior art and is not detailed here again.

Optionally, the processing unit 12 may specifically include:
a first processing subunit, configured to obtain carrier phase information, carrier wavelength information, and satellite ephemeris information of the satellite signals by parsing the satellite signals; and
a second processing subunit, configured to obtain an azimuth of the baseline and/or a pitch angle of the baseline according to the carrier phase information, the carrier wavelength information, and the satellite ephemeris information, and to obtain an azimuth of the base station antenna and/or a downtilt of the base station antenna according to the azimuth of the baseline and/or the pitch angle of the baseline and the preset position relationship.

Persons skilled in the art may learn that the carrier phase information, the carrier wavelength information, and the satellite ephemeris information may be understood with reference to relevant prior art.

Exemplarily, a satellite ephemeris is mainly used for calculating coordinates of a GPS satellite in the World Geodetic System (WGS, World Geodetic System). The longitude and latitude of the receiving antenna units may be obtained through the satellite ephemeris.

The azimuth of the base station antenna is a clockwise angle from due north to the direction of a main lobe of the base station antenna.

The azimuth of the baseline is an angle centering around an endpoint of the baseline and rotating clockwise from due north to the direction of the baseline.

The downtilt of the base station antenna is a clockwise angle from the horizontal plane to the normal direction of the base station antenna.

The pitch angle of the baseline is a clockwise angle from a ray to the horizontal plane, where the ray is drawn from one receiving antenna unit which is taken as an origin to another receiving antenna unit.

Specifically, in the apparatus for acquiring information about the base station antenna in the embodiment of the present invention, the second processing subunit may be specifically configured to:
obtain, according to the carrier phase information and the carrier wavelength information, wave paths from the GPS satellite to the two receiving antenna units, and obtain a wave path difference between the two receiving antenna units;
obtain, according to the satellite ephemeris information, coordinates of the GPS satellite in the World Geodetic System WGS;
obtain, according to the wave paths from the GPS satellite to the two receiving antenna units, the wave path difference, and the coordinates of the GPS satellite in the World Geodetic System WGS, coordinates of the baseline in the World Geodetic System WGS;
convert the coordinates of the baseline in the World Geodetic System WGS to coordinates in the local level system (LLS, Local Level System); and
obtain, according to the coordinates of the baseline in the local level system LLS, the azimuth of the baseline and/or the pitch angle of the baseline.

Persons skilled in the art may learn that the local level system is a topocentric rectangular coordinate system, where its origin overlaps the origin of a carrier coordinate system, X-axis points to the local north meridian line (North), Y-axis is perpendicular to X-axis and points east (East), and Z-axis (Down) is orthogonal to X-axis and Y-axis. Therefore, it is convenient to obtain the azimuth of the baseline and the pitch angle of the baseline through local coordinates of the baseline.

Specifically, in the apparatus for acquiring information about the base station antenna in the embodiment of the present invention, the second processing subunit may further be specifically configured to:
obtain, by subtracting the preset included angle value from the azimuth of the baseline, the azimuth of the base station antenna; and
obtain, by subtracting the pitch angle of the baseline from the preset included angle value, the downtilt of the base station antenna.

It can be seen that the azimuth and the pitch angle of the baseline are acquired through the GPS satellite signals, and then the azimuth of the base station antenna and the downtilt of the base station antenna are obtained, thereby avoiding disadvantages of manual collection such as low efficiency, poor real-time performance, high cost, and low accuracy, and the external device being easy to be influenced by factors such as a surrounding magnetic field and an atmospheric environment.

In the apparatus for acquiring information about the base station antenna in the embodiment of the present invention, optionally, the first processing subunit may be further configured to obtain the longitude and latitude information and/or height information of the receiving antenna units by parsing the satellite signals; and
the second processing subunit may further be configured to obtain the longitude and latitude information and/or height information of the base station antenna according to the longitude and latitude information and/or height information of the receiving antenna units and the preset position relationship.

Specifically, the preset position relationship includes: the receiving antenna units are located in the upper part of the base station antenna, and the height of the base station antenna is the mounting height. The second processing subunit may be specifically configured to:
obtain, by dividing the longitude sum of the receiving antenna units by the number of the receiving antenna units, the longitude of the base station antenna; and obtain, by dividing the sum of longitude and latitude of the receiving antenna units by the number of the receiving antenna units, the latitude of the base station antenna; and
obtain, by dividing the height sum of the receiving antenna units by the number of the receiving antenna units, and in combination with the height of the base station antenna, the mounting height of the base station antenna.

Persons skilled in the art may learn that the mounting height of the base station antenna may refer to a height calculated from the center point of the base station antenna, and therefore, the height of the base station antenna needs to be considered.

Optionally, the mounting height of the base station antenna may also refer to a height difference from the center point of the base station antenna to the ground where the base station is located. Therefore, to obtain the mounting height of the base station antenna, the height of the base station antenna and the altitude of the ground where the base station is located need to be considered, that is, the mounting height of the base station antenna is obtained by subtracting the altitude of the ground where the base station is located and the 1/2 height of the base station antenna from the altitude of the base station antenna.

In the apparatus for acquiring information about the base station antenna in the embodiment of the present invention, optionally, the number of the receiving antenna units may be 3, the position relationship among the 3 receiving antenna units is determined, and the receiving antenna units and the base station antenna accord with a preset position relationship. Exemplarily, a connecting line between each two receiving antenna units forms a baseline, and therefore, the azimuth of three groups of the base station antenna and the downtilt of the base station antenna are obtained, and then the azimuth of the base station antenna and the downtilt of the base station antenna are obtained according to calculation of the azimuth of the three groups of the base station antenna and the downtilt of the base station antenna.

Persons skilled in the art may understand that when the number of the receiving antenna units is more than 3, the position information of the base station antenna may be acquired with reference to the manner described in this embodiment, which is not detailed here again.

Optionally, the number of GPS satellites for sending satellite signals is at least 2. In this way, the receiving antenna units may calculate the average of the obtained position information of the base station antenna by receiving the satellite signals sent by multiple GPS satellites so as to improve the accuracy of the position information of the base station antenna.

An embodiment of the present invention provides a base station antenna, including the apparatus for acquiring information about the base station antenna in the foregoing embodiment.

The apparatus for acquiring information about the base station antenna may be understood with reference to the apparatus for acquiring information about the base station antenna and its structure in the foregoing embodiment, which is not detailed here again.

Optionally, the apparatus for acquiring information about the base station antenna may be integrated with an independent unit that is used as a base station antenna or be integrated with the base station antenna, which is not limited here.

It can be seen from the foregoing technical solutions provided in the embodiment of the present invention, acquiring information about the base station antenna through the satellite signals does not require an on-site collection of information of the base station antenna by an engineer using an external device, thereby avoiding disadvantages of manual collection such as low efficiency, poor real-time performance, high cost, and low accuracy, and the external device being easy to be influenced by factors such as a surrounding magnetic field and an atmospheric environment.

As shown in FIG. 2, corresponding to the method for acquiring information about the base station antenna in the foregoing embodiment, a method for acquiring information about the base station antenna according to an embodiment of the present invention includes:
21: Receive, through at least two receiving antenna units, satellite signals sent by a satellite in the Global Positioning System GPS, where the receiving antenna units and the base station antenna accord with a preset position relationship; and
22: Obtain, according to the satellite signals, position information of the receiving antenna units; and obtain, according to the position information of the receiving antenna units and a preset position relationship between the receiving antenna units and the base station antenna, position information of the base station antenna.

In the embodiment of the present invention, the GPS satellite positioning system is taken as an example for description, but it is not limited to the GPS and can also be another satellite positioning system.

It can be seen from the foregoing technical solutions provided in the embodiment of the present invention, acquiring information about the base station antenna through the satellite signals does not require an on-site collection of information of the base station antenna by an engineer using an external device, thereby avoiding disadvantages of manual collection such as low efficiency, poor real-time performance, high cost, and low accuracy, and the external device being easy to be influenced by factors such as a surrounding magnetic field and an atmospheric environment.

In the method for acquiring information about the base station antenna according to the embodiment of the present invention, the preset position relationship includes: a baseline formed by a connecting line between the receiving antenna units and a normal of the base station antenna have a preset included angle relationship. A preset included angle value includes any angle value ranging from 0 degree to 180 degrees. Preferentially, the preset value may be 90 degrees or 0 degree.

Optionally, in the method for acquiring information about the base station antenna in the embodiment of the present invention, the foregoing step 22 may include:
obtain, by parsing the satellite signals, carrier phase information, carrier wavelength information, and satellite ephemeris information of the satellite signals; and
obtain, according to the carrier phase information, the carrier wavelength information, and the satellite ephemeris information, the azimuth of the baseline and/or the pitch angle of the baseline; and obtain, according to the azimuth of the baseline and/or the pitch angle of the baseline and the preset position relationship, the azimuth of the base station antenna and/or the downtilt of the base station antenna.

The satellite ephemeris, the normal of the base station antenna, the azimuth of the base station antenna, the azimuth of the baseline, the downtilt of the base station antenna, and the pitch angle of the baseline may be understood with reference to the foregoing embodiment, which are not detailed here again.

Specifically, the obtaining, according to the carrier phase information, the carrier wavelength information, and the satellite ephemeris information, the azimuth of the baseline and/or the pitch angle of the baseline may specifically include:
obtaining, according to the carrier phase information and the carrier wavelength information, the wave paths from the GPS satellite to the two receiving antenna units, and obtaining the wave path difference between the two receiving antenna units;
obtaining, according to the satellite ephemeris information, the coordinates of the GPS satellite in the World Geodetic System WGS;
obtaining, according to the wave paths from the GPS satellite to the two receiving antenna units, the wave path difference, and the coordinates of the GPS satellite in the World Geodetic System WGS, the coordinates of the baseline in the World Geodetic System WGS;
converting the coordinates of the baseline in the World Geodetic System WGS to the coordinates in the local level system LLS; and
obtaining, according to the coordinates of the baseline in the local level system LLS, the azimuth of the baseline and/or the pitch angle of the baseline.

Specifically, the obtaining, according to the azimuth of the baseline and/or the pitch angle of the baseline and the preset position relationship, the azimuth of the base station antenna and/or the downtilt of the base station antenna, may specifically include:
obtaining, by subtracting the preset included angle value from the azimuth of the baseline, the azimuth of the base station antenna; and
obtaining, by subtracting the pitch angle of the baseline from the preset included angle value, the downtilt of the base station antenna.

Optionally, in the method for acquiring information about the base station antenna in the embodiment of the present invention, the foregoing step 22 may include:
obtaining, by parsing the satellite signals, the longitude and latitude information and/or height information of the receiving antenna units; and
obtaining, according to the longitude and latitude information and/or height information of the receiving antenna units and the preset position relationship, the longitude and latitude information and/or height information of the base station antenna.

Specifically, the preset position relationship includes: the receiving antenna units are located in the upper part of the base station antenna, and the height of the base station antenna is the mounting height. The obtaining, according to the longitude and latitude information and/or height information of the receiving antenna units and the preset position relationship, the longitude and latitude information and/or height information of the base station antenna, may include:
obtaining, by dividing the longitude sum of the receiving antenna units by the number of the receiving antenna units, the longitude of the base station antenna; and obtaining, by dividing the sum of longitude and latitude of the receiving antenna units by the number of the receiving antenna units, the latitude of the base station antenna; and
obtaining, by dividing the height sum of the receiving antenna units by the number of the receiving antenna units, and in combination with the height of the base station antenna, the mounting height of the base station antenna.

Optionally, the number of the receiving antenna units may be 3, the position relationship among the 3 receiving antenna units is determined, and the receiving antenna units and the base station antenna accord with a preset position relationship. A connecting line between each two receiving antenna units forms a baseline, and therefore, the azimuth of the three groups of the base station antenna and the downtilt of the base station antenna are obtained, and then, the azimuth of the three groups of the base station antenna and the downtilt of the base station antenna are calculated to obtain the azimuth of the base station antenna and the downtilt of the base station antenna.

Optionally, in the method for acquiring information about the base station antenna in the embodiment of the present invention, the number of GPS satellites for sending satellite signals is at least 2. In this way, in step 21, the receiving antenna units may integrate the obtained position information of the base station antenna by receiving satellite signals sent by multiple GPS satellites, thereby increasing the accuracy of the position information of the base station antenna.

### Embodiment 1 of the Present Invention

An embodiment of the present invention provides an apparatus for acquiring information about a base station antenna to improve the accuracy and efficiency of the engineering parameter measurement of the base station antenna, and to enhance the capacity of a subsequent network management system and a network optimization system to automatically acquire parameters.

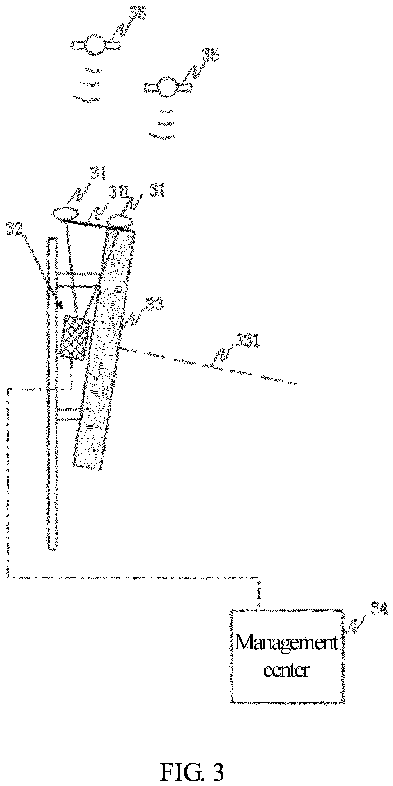

As shown in FIG. 3, two receiving antenna units 31 receive satellite signals of a GPS satellite 35; the two receiving antenna units 31 are connected to a processing unit 32; the processing unit 32 is configured to obtain position information of a base station antenna 33 through the satellite signals; the processing unit 32 is connected to a management center 34 through a transmission channel; and the management center 34 is configured to collect and manage the position information of the base station antenna 33 in a centralized way.

An included angle between a connecting line 311 of the two receiving antenna units 31 and a normal 331 of the base station antenna 33 is 0 degree.

The processing unit 32 may directly perform calculations to obtain the final position information according to the satellite signals, and may also obtain, according to the satellite signals, some intermediate data for calculating position information, and transmit the data to the management center 34; and then the management center 34 calculates and obtains the final position information. Optionally, the information obtained by the processing unit 32 through processing may be packed according to specifications as required and then be transmitted to the management center 34.

Through the transmission channel, the management center 34 sends a delivered query command to the processing unit 32, or the processing unit 32 actively uploads the acquired information to the management center 34. Optionally, the transmission channel may be wired, wireless, optical network or any other form of a channel, and the transmission channel may be a private channel, and may also be a shared channel used with other information.

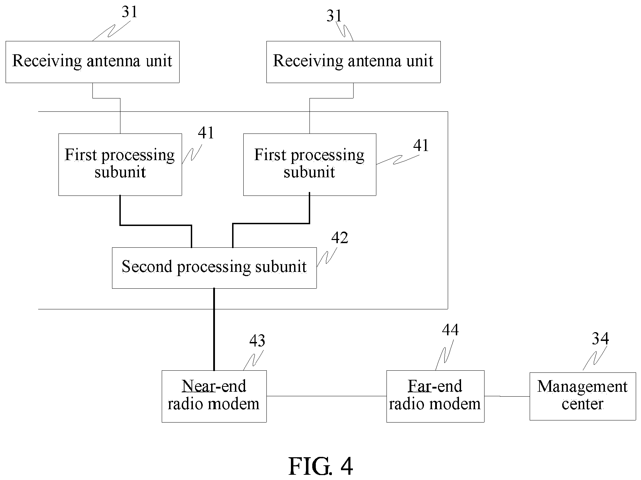

Specifically, as shown in FIG. 4, the processing unit 32 may further include: a first processing subunit 41 and a second processing subunit 42, where the first processing subunit 41 parses the satellite signals of a GPS satellite 35, the second processing subunit 42 processes messages transmitted by the first processing subunit 41, and then the position information of the base station antenna 33 is obtained.

The obtained information processed by the second processing subunit 42 may be transmitted to a near-end radio modem 43, the near-end radio modem 43 may transmit the received information to a far-end radio modem 44 over a wireless network, and then the far-end radio modem 44 transmits the information to the management center 34.

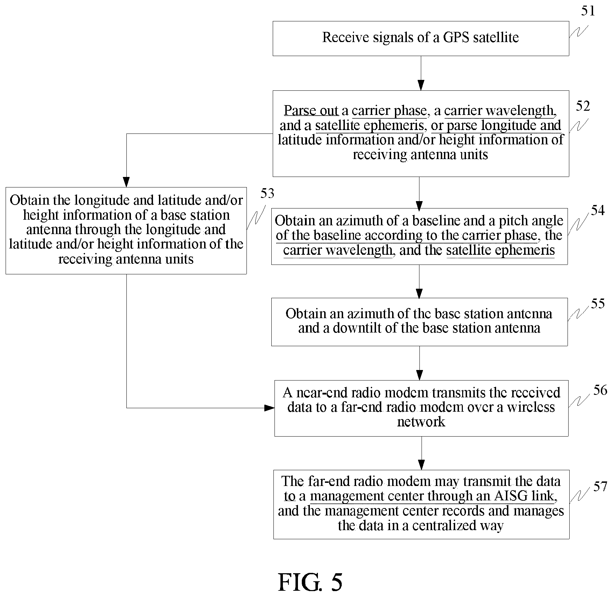

As shown in FIG. 5, a specific process of the acquiring method corresponding to the apparatus for acquiring information about the base station antenna in the embodiment of the present invention is described in detail in the following:
Install two receiving antenna units, fix the two receiving antenna units and the base station antenna that needs to be measured by using a mechanical apparatus, for example, setting an included angle between a baseline formed by a connecting line between the two receiving antenna units and a normal of the base station antenna to 0 degree.
51: Receive signals of a GPS satellite.
   The two receiving antenna units receive signals of the GPS satellite, and send the signals to the processing unit.
52: The first processing subunit parses the received GPS satellite signals to obtain the longitude and latitude information and/or height information of the receiving antenna units, and sends the information to the second processing subunit. Enter 53.
   Or, the first processing subunit parses the received GPS satellite signals to obtain carrier phase information, carrier wavelength information, and satellite ephemeris information which are received by the receiving antenna units, and sends the information to the second processing subunit. Enter 54.
53: The longitude and latitude and/or height information of the base station antenna is obtained according to the longitude and latitude information and/or height information of the receiving antenna units.
   The second processing subunit acquires the longitude, latitude, and height information (B1, L1, M1), (B2, L2, M2) of the receiving antenna units, where B represents longitude and latitude, L represents latitude, and M represents height.
   Meanwhile, referring to FIG. 3, the two receiving antenna units are located in the upper part of the base station antenna. The second processing subunit performs calculations by the longitude, latitude and height information of the two receiving antenna units, to obtain the longitude and latitude of the base station antenna ((B1+B2)/2, (L1+L2)/2), and the mounting height of the base station antenna (Ml+M2)/2-h, where h is the 1/2 height of the base station antenna.
   The second processing subunit may further pack and transmit the longitude and latitude and height information of the base station antenna to the near-end radio modem. Enter 56.
54: Obtain the azimuth of the baseline and the pitch angle of a baseline vector according to a carrier phase, a carrier wavelength, and a satellite ephemeris.

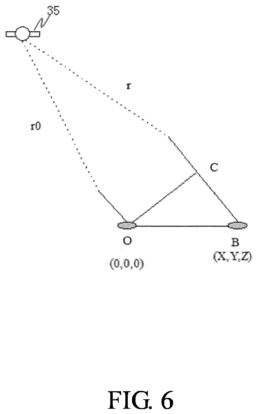

As shown in FIG. 6, O represents one receiving antenna unit, B represents another receiving antenna unit, and then, OB is a baseline (can be understood as a baseline vector), where O point is the origin of coordinates, its coordinates are (0, 0, 0), and coordinates of B are (X, Y, Z).

The wave paths from the GPS satellite to the two receiving antenna units are r0 and r, respectively, and the carrier phase information received by the two receiving antenna units is ϕο and ϕB, respectively.

Draw a line perpendicular to the vector r from O point, obtain a point C where the line intersects the vector r, and the wave path difference BC is a projection of the baseline vector OB on the arrival direction of a carrier wave of the GPS satellite signal.

Specifically, obtaining the azimuth of the baseline vector and the pitch angle of the baseline vector may include the following steps:
(1) Through the following formula 1, according to carrier phase information ϕo and ϕB, and the carrier wavelength of the GPS satellite signal, wave paths r0 and r from the GPS satellite to the two receiving antenna units are obtained, where the wave paths are distances from the carrier wave of the GPS satellite signal to the receiving antenna units. $r 0 = φ o ∗ λ , r = φ B ∗ λ$ formula 1 where λ is a carrier wavelength of the GPS satellite signal.
(2) Through the following formula 2, according to the wave path difference of the two receiving antenna units, the projection coordinates of the baseline in the World Geodetic System (WGS) are obtained. $d = r - {r}_{0} = \frac{{x}_{s}}{r} X + \frac{{y}_{s}}{r} Y + \frac{{z}_{s}}{r} Z = cos θ \cdot X + cos φ \cdot Y + cos ψ \cdot Z = e \cdot b$ formula 2
   where d is the wave path difference of the two receiving antenna units, that is, a difference between distances from the GPS carrier signal to the two receiving antenna units; d consists of several integral number of carrier wave periods and the decimal number of an incomplete carrier wave period; and d=(N+Δ)λ, where λ is a carrier wavelength, N is the integral number of carrier wave periods, and Δ is a residual decimal;
   (Xs, Ys, Zs) are coordinates of the GPS satellite in the World Geodetic System (WGS), which can also be represented as [*Xₛ Yₛ Zₛ*]*_{WGS}* ; specifically, the coordinates of the GPS satellite in the World Geodetic System (WGS) may be obtained through the satellite ephemeris; (*X, Y, Z*) are the projection coordinates of the baseline in the World Geodetic System (WGS), which can also be represented as [*X Y Z*]*_{WGS}* ; $\frac{{x}_{s}}{r}$ corresponds to cos *θ*, $\frac{{y}_{s}}{r}$ corresponds to cos *φ*, and $\frac{{z}_{s}}{r}$ corresponds to cos *ϕ*;
   e is a vector of the receiving antenna units to the direction of the GPS satellite. Because the distance between the two receiving antenna units and the GPS satellite is far greater than the distance between the two receiving antenna units, a vector of any receiving antenna unit of the two receiving antenna units to the direction of the GPS satellite may be considered as the foregoing e; and
   b is a vector of the baseline in the World Geodetic System (WGS).

   It can be seen that the projection coordinates [*X Y Z*]*_{WGS}* of the baseline in the World Geodetic System (WGS) may be calculated and obtained through the foregoing formula 2.
(3) Through the following formula 3, the projection coordinates [*X Y Z*]*_{WGS}* of the baseline vector in the World Geodetic System (WGS) are converted to coordinates [*X Y Z*]*_{LLS}* of the baseline vector in the local level system (LLS, Local Level System). ${\left(\begin{matrix}X \\ Y \\ Z\end{matrix}\right)}_{LLS} = \left[\begin{matrix}- sin B cos L & - sin L & - cos N cos L \\ - sin B sin L & cos L & - cos B sin L \\ - cos B & 0 & - sin B\end{matrix}\right] ∗ \left({\left(\begin{matrix}X \\ Y \\ Z\end{matrix}\right)}_{WGS}-{\left(\begin{matrix}{X}_{o} \\ {Y}_{o} \\ {Z}_{o}\end{matrix}\right)}_{WGS}\right)$ formula 3 where B and L are the longitude and latitude of a receiving antenna unit represented by B, respectively, and the longitude and latitude of the receiving antenna unit may be directly read from the satellite ephemeris.
(4) Because positions of the two receiving antennas are relatively fixed, that is, coordinate positions of the two receiving antennas in the carrier coordinate system are determined; the azimuth *α* of the baseline vector is calculated through the following formula 4. $α = - ar tan \left(\frac{{Y}_{LLS}}{{X}_{LLS}}\right)$ formula 4
   Through the following formula 5, the pitch angle *β* of the baseline vector is calculated. $β = - ar tan \left(\frac{{Z}_{LLS}}{\sqrt{{X}_{LLS}^{2} + {Y}_{LLS}^{2}}}\right)$ formula 5 55: Obtain the azimuth of the base station antenna and the downtilt of the base station antenna.

The second processing subunit calculates the azimuth of the base station antenna through the azimuth *α* of the baseline vector, the azimuth of the base station antenna = *α* - an included angle between a baseline formed by a connecting line between the two receiving antenna units and a normal of the base station antenna; that is, the azimuth of the base station antenna = *α* -0, and the azimuth of the base station antenna = *α.*

The second processing subunit calculates the downtilt *ϕ* of the base station antenna through the pitch angle *β* of the base vector; that is, the downtilt *ϕ* of the base station antenna = the included angle between a baseline formed by a connecting line between the two receiving antenna units and a normal of the base station antenna -*β* ; that is, the downtilt of the base station antenna *ϕ* = 0-*β*, and *ϕ* = -*β*.

The second processing subunit may further pack and transmit the data about the azimuth of the base station antenna and the downtilt of the base station antenna to the near-end radio modem through the transmission subunit.

56: The near-end radio modem transmits the received data to the far-end radio modem over a wireless network.

57: The far-end radio modem may transmit the data to the management center through an AISG (Antenna Interface Standards Group, antenna interface standards) link, and the management center records and manages the data in a centralized way.

It can be seen that the apparatus and method for acquiring information about the base station antenna provided in the embodiments of the present invention enables a remote information detection of the base station antenna without accessing a base station, avoiding possible errors which may exist in manual reading and recording of engineering parameters; data is read in real time, engineering parameters of the antenna may be measured at any time, which provides a basis for network self-optimization.

The measurement accuracy is improved in a complex situation where the measurement is affected by the surrounding environment (for example, a magnetic field and an atmospheric pressure); the accuracy and efficiency of the engineering parameter measurement of the base station antenna is improved, and the capacity of a subsequent network management system and a network optimization system to automatically acquire parameters is enhanced; the antenna engineering parameters are remotely collected and managed in a centralized way, which provides a convenient data interface for applications such as network analysis and network optimization.

### Embodiment 2 of the Present Invention

The embodiment of the present invention differs from the foregoing embodiment as follows: The number of receiving antenna units is 3, q position relationship among the receiving antenna units is determined, and the receiving antenna units and a base station antenna accord with a preset position relationship.

A connecting line between each two receiving antenna units forms a baseline, and therefore, the azimuth of the three groups of the base station antenna and the downtilt of the base station antenna are obtained through the formula 1 to the formula 5 in the foregoing embodiment, and then, an average of the azimuth of the three groups of the base station antenna and the downtilt of the base station antenna is calculated and integrated to obtain the azimuth of the base station antenna and the downtilt of the base station antenna.

Persons skilled in the art may understand that when the number of the receiving antenna units is more than 3, the position information of the base station antenna may be acquired with reference to the manner described in this embodiment, which is not detailed here again.

### Embodiment 3 of the Present Invention

The difference between the embodiment of the present invention and the foregoing embodiments is that a processing unit includes: a first processing subunit and a transmission unit which is connected to the first processing subunit, where the first processing subunit parses satellite signals of the GPS satellite to obtain carrier phase information, carrier wavelength information, and satellite ephemeris information, or parses the satellite signals to obtain longitude and latitude and/or height information of receiving antenna units.

The transmission unit transmits the information sent by the first processing subunit to a management center through a near-end radio modem and a far-end radio modem, and the transmission unit can physically be a transmission machine.

The management center performs calculation processing to obtain the longitude and latitude and/or height information of a base station antenna according to the obtained information, or to obtain the azimuth of the base station antenna and the downtilt of the base station antenna, that is, a function of a second processing subunit is performed by the management center. The management center records and manages position information of the base station antenna in a centralized way.

Persons skilled in the art may understand that in the foregoing embodiments, the processing unit can physically be a processor, the processing subunit may be a sub-processor, the receiving antenna units may be a receiving antenna of a satellite positioning system, such as a GPS antenna, and the transmission unit may be a data transceiver, such as a radio modem.

The foregoing descriptions are merely exemplary and specific implementation manners of the present invention, but not intended to limit the protection scope of the present invention. Therefore, the protection scope of the present invention shall be subject to the protection scope of the claims.

Persons of ordinary skill in the art should understand that all or a part of the processes of the methods in the embodiments may be implemented by a computer program instructing relevant hardware. The program may be stored in a computer readable storage medium. When the program is executed, the processes of the methods in the embodiments are performed. The storage medium may be a magnetic disk, a compact disk, a read-only memory (Read-Only Memory, ROM), or a random access memory (Random Access Memory, RAM), and so on.

## Claims

1. An apparatus for acquiring information about a base station antenna, wherein the apparatus is integrated with the base station antenna, comprising:
at least two receiving antenna units (11), configured to receive satellite signals sent by a satellite in a satellite positioning system, wherein the at least two receiving antenna units (11) and the base station antenna accord with a preset position relationship; and
a processing unit (12), configured to obtain position information of the at least two receiving (11) antenna units according to the satellite signals, and to obtain position information of the base station antenna according to the position information of the at least two receiving antenna units (11) and the preset position relationship between the at least two receiving antenna units (11) and the base station antenna, wherein the preset position relationship comprises: a baseline formed by a connecting line between the at least two receiving antenna units (11) and a normal of the base station antenna have a relationship of a preset included angle, and a value of the preset included angle comprises any angle value ranging from 0 degree to 180 degrees; and the processing unit (12) comprises:
a first processing subunit, configured to obtain carrier phase information, carrier wavelength information, and satellite ephemeris information of the satellite signals by parsing the satellite signals; and
a second processing subunit, configured to obtain an azimuth of the baseline and/or a pitch angle of the baseline according to the carrier phase information, the carrier wavelength information, and the satellite ephemeris information, and to obtain an azimuth of the base station antenna according to the azimuth of the baseline and the preset position relationship and/or a downtilt of the base station antenna according to the pitch angle of the baseline and the preset position relationship, respectively, wherein the second processing subunit is specifically configured to:
obtain, according to the carrier phase information and the carrier wavelength information, wave paths from the satellite to the at least two receiving antenna units (11), and obtain a wave path difference between the at least two receiving antenna units (11);
obtain, according to the satellite ephemeris information, coordinates of the satellite in the World Geodetic System WGS;
obtain, according to the wave paths from the satellite to the at least two receiving antenna units (11), the wave path difference, and the coordinates of the satellite in the World Geodetic System WGS, coordinates of the baseline in the World Geodetic System WGS;
convert the coordinates of the baseline in the World Geodetic System WGS to coordinates in the local level system LLS;
obtain, according to the coordinates of the baseline in the local level system LLS, the azimuth of the baseline and/or the pitch angle of the baseline;
obtain, by subtracting the preset included angle value from the azimuth of the baseline, the azimuth of the base station antenna and/or
obtain, by subtracting the pitch angle of the baseline from the preset included angle value, the downtilt of the base station antenna, respectively.

2. The apparatus according to claim 1, wherein the processing unit (12) comprises:
a first processing subunit, configured to obtain longitude and latitude information and/or height information of the at least two receiving antenna units by parsing the satellite signals; and
a second processing subunit, configured to obtain longitude and latitude information and/or height information of the base station antenna according to the longitude and latitude information and/or height information of the at least two receiving antenna units and the preset position relationship.

3. The apparatus according to claim 2, wherein the preset position relationship comprises:
the at least two receiving antenna units are located in an upper part of the base station antenna, and the height of the base station antenna is the mounting height; and the second processing subunit is specifically configured to:
obtain, by dividing the longitude sum of the at least two receiving antenna units by the number of the at least two receiving antenna units, the longitude of the base station antenna; and obtain, by dividing the sum of longitude and latitude of the at least two receiving antenna units by the number of the at least two receiving antenna units, the latitude of the base station antenna; and
obtain, by dividing the height sum of the at least two receiving antenna units by the number of the at least two receiving antenna units, and in combination with the height of the base station antenna, the mounting height of the base station antenna.

4. The apparatus according to claim 1, wherein the satellite positioning system is the Global Positioning System GPS.

5. A base station antenna, comprising the apparatus for acquiring information about the base station antenna according to any one of claims 1-4.

6. A method for acquiring information about a base station antenna, wherein the method comprises:
Receiving (21), through at least two receiving antenna units, satellite signals sent by a satellite in a satellite positioning system, wherein the at least two receiving antenna units and the base station antenna accord with a preset position relationship; and
Obtaining (22), according to the satellite signals, position information of the at least two receiving antenna units; and obtaining from a process unit which is integrated with the base station antenna, according to the position information of the at least two receiving antenna units and the preset position relationship between the at least two receiving antenna units and the base station antenna, position information of the base station antenna, wherein the preset position relationship comprises: a baseline formed by a connecting line between the at least two receiving antenna units and a normal of the base station antenna have a preset included angle relationship, and a preset included angle value comprises any angle value ranging from 0 degree to 180 degrees; in this case, the obtaining, according to the satellite signals, position information of the baseline, and the obtaining, according to the position information of the baseline and the preset position relationship, the position information of the base station antenna comprises:
obtaining, by parsing the satellite signals, carrier phase information, carrier wavelength information, and satellite ephemeris information of the satellite signals; and
obtaining, according to the carrier phase information, the carrier wavelength information, and the satellite ephemeris information, an azimuth of the baseline and/or a pitch angle of the baseline; and obtaining an azimuth of the base station antenna according to the azimuth of the baseline and the preset position relationship and/or obtaining a downtilt of the base station antenna according to the pitch angle of the baseline and the preset position relationship, respectively, wherein the obtaining, according to the carrier phase information, the carrier wavelength information, and the satellite ephemeris information, the azimuth of the baseline and/or the pitch angle of the baseline comprises:
obtaining, according to the carrier phase information and the carrier wavelength information, wave paths from the satellite to the at least two receiving antenna units, and obtaining a wave path difference between the at least two receiving antenna units;
obtaining, according to the satellite ephemeris information, coordinates of the satellite in the World Geodetic System WGS;
obtaining, according to the wave paths from the satellite to the at least two receiving antenna units, the wave path difference, and the coordinates of the satellite in the World Geodetic System WGS, coordinates of the baseline in the World Geodetic System WGS;
converting the coordinates of the baseline in the World Geodetic System WGS to coordinates in the local level system LLS; and
obtaining, according to the coordinates of the baseline in the local level system LLS, the azimuth of the baseline and/or the pitch angle of the baseline, wherein the obtaining, according to the azimuth of the baseline and/or the pitch angle of the baseline and the preset position relationship, the azimuth of the base station antenna and/or the downtilt of the base station antenna comprises:
obtaining, by subtracting the preset included angle value from the azimuth of the baseline, the azimuth of the base station antenna and/or
obtaining, by subtracting the pitch angle of the baseline from the preset included angle value, the downtilt of the base station antenna, respectively.

7. The method according to claim 6, wherein the obtaining, according to the satellite signals, position information of the baseline, and the obtaining, according to the position information of the baseline and the preset position relationship, the position information of the base station antenna comprises:
obtaining, by parsing the satellite signals, longitude and latitude information and/or height information of the at least two receiving antenna units; and
obtaining, according to the longitude and latitude information and/or height information of the at least two receiving antenna units and the preset position relationship, longitude and latitude information and/or height information of the base station antenna.

8. The method according to claim 7, wherein the preset position relationship comprises: the at least two receiving antenna units are located in an upper part of the base station antenna, and the height of the base station antenna is the mounting height; and the obtaining, according to the longitude and latitude information and/or height information of the at least two receiving antenna units and the preset position relationship, the longitude and latitude information and/or height information of the base station antenna comprises:
obtaining, by dividing the longitude sum of the at least two receiving antenna units by the number of the at least two receiving antenna units, the longitude of the base station antenna; and obtaining, by dividing the sum of longitude and latitude of the at least two receiving antenna units by the number of the at least two receiving antenna units, the latitude of the base station antenna; and
obtaining, by dividing the height sum of the at least two receiving antenna units by the number of the at least two receiving antenna units, and in combination with the height of the base station antenna, the mounting height of the base station antenna.

9. The method according to claim 6, wherein the satellite positioning system is the Global Positioning System GPS.

## Patentansprüche

1. Vorrichtung zum Erfassen von Informationen über eine Basisstationsantenne, wobei die Vorrichtung in die Basisstationsantenne integriert ist, wobei die Vorrichtung Folgendes umfasst:
wenigstens zwei Empfangsantenneneinheiten (11), die konfiguriert sind, durch einen Satelliten in einem Satellitenpositionierungssystem gesendete Satellitensignale zu empfangen, wobei die wenigstens zwei Empfangsantenneneinheiten (11) und die Basisstationsantenne mit einer vorgegebenen Positionsbeziehung übereinstimmen; und
eine Verarbeitungseinheit (12), die konfiguriert ist, Positionsinformationen der wenigstens zwei Empfangsantenneneinheiten (11) gemäß den Satellitensignalen zu erhalten und die Positionsinformationen der Basisstationsantenne gemäß den Positionsinformationen der wenigstens zwei Empfangsantenneneinheiten (11) und der vorgegebenen Positionsbeziehung zwischen den wenigstens zwei Empfangsantenneneinheiten (11) und der Basisstationsantenne zu erhalten, wobei die vorgegebene Positionsbeziehung Folgendes umfasst: eine Basislinie, die durch eine Verbindungslinie zwischen den wenigstens zwei Empfangsantenneneinheiten (11) ausgebildet ist, und eine Normale der Basisstationsantenne weisen eine Beziehung eines vorgegebenen eingeschlossenen Winkels auf und ein Wert des vorgegebenen eingeschlossenen Winkels umfasst irgendeinen Winkelwert, der von 0 Grad bis 180 Grad reicht; wobei die Verarbeitungseinheit (12) Folgendes umfasst:
eine erste Verarbeitungsuntereinheit, die konfiguriert ist, Trägerphaseninformationen, Trägerwellenlängeninformationen und Satellitenephemerideninformationen der Satellitensignale durch das Parsen der Satellitensignale zu erhalten; und
eine zweite Verarbeitungsuntereinheit, die konfiguriert ist, ein Azimut der Basislinie und/oder einen Steigungswinkel der Basislinie gemäß den Trägerphaseninformationen, den Trägerwellenlängeninformationen und den Satellitenephemerideninformationen zu erhalten und ein Azimut der Basisstationsantenne gemäß dem Azimut der Basislinie und der vorgegebenen Positionsbeziehung und/oder eine Abwärtsneigung der Basisstationsantenne gemäß dem Steigungswinkel der Basislinie und der vorgegebenen Positionsbeziehung zu erhalten, wobei die zweite Verarbeitungsuntereinheit spezifisch konfiguriert ist:
Wellenwege von dem Satelliten zu den wenigstens zwei Empfangsantenneneinheiten (11) gemäß den Trägerphaseninformationen und den Trägerwellenlängeninformationen zu erhalten und einen Wellenwegunterschied zwischen den wenigstens zwei Empfangsantenneneinheiten (11) zu erhalten;
Koordinaten des Satelliten im Geodätischen Weltsystem WGS gemäß den Satellitenephemerideninformationen zu erhalten;
Koordinaten der Basislinie in dem Geodätischen Weltsystem WGS gemäß den Wellenwegen von dem Satelliten zu den wenigstens zwei Empfangsantenneneinheiten (11), dem Wellenwegunterschied und den Koordinaten des Satelliten in dem Geodätischen Weltsystem WGS zu erhalten;
die Koordinaten der Basislinie im Geodätischen Weltsystem WGS in Koordinaten des Systems der lokalen Ebene LLS umzusetzen;
das Azimut der Basislinie und/oder den Steigungswinkel der Basislinie gemäß den Koordinaten der Basislinie im System der lokalen Ebene LLS zu erhalten;
das Azimut der Basisstationsantenne durch Subtrahieren des Werts des vorgegebenen eingeschlossenen Winkels vom Azimut der Basislinie zu erhalten und/oder die Abwärtsneigung der Basisstationsantenne durch Subtrahieren des Steigungswinkels der Basislinie von dem Wert des vorgegebenen eingeschlossenen Winkels zu erhalten.

2. Vorrichtung nach Anspruch 1, wobei die Verarbeitungseinheit (12) Folgendes umfasst:
eine erste Verarbeitungsuntereinheit, die konfiguriert ist, Informationen des Längengrads und des Breitengrads und/oder Höheninformationen der wenigstens zwei Empfangsantenneneinheiten durch Parsen der Satellitensignale zu erhalten; und eine zweite Verarbeitungsuntereinheit, die konfiguriert ist, Informationen des Längengrads und des Breitengrads und/oder Höheninformationen der Basisstationsantenne gemäß den Informationen des Längengrads und des Breitengrads und/oder den Höheninformationen der wenigstens zwei Empfangsantenneneinheiten und der vorgegebenen Positionsbeziehung zu erhalten.

3. Vorrichtung nach Anspruch 2, wobei die vorgegebene Positionsbeziehung Folgendes umfasst: die wenigstens zwei Empfangsantenneneinheiten befinden sich in einem oberen Abschnitt der Basisstationsantenne und die Höhe der Basisstationsantenne ist die Befestigungshöhe; wobei die zweite Verarbeitungsuntereinheit spezifisch konfiguriert ist:
die geographische Länge der Basisstationsantenne durch Teilen der Summe der geographischen Längen der wenigstens zwei Empfangsantenneneinheiten durch die Anzahl der wenigstens zwei Empfangsantenneneinheiten zu erhalten; und die geographische Breite der Basisstationsantenne durch Teilen der Summe der geographischen Länge und der geographischen Breite der wenigstens zwei Empfangsantenneneinheiten durch die Anzahl der wenigstens zwei Empfangsantenneneinheiten zu erhalten; und
die Befestigungshöhe der Basisstationsantenne durch Teilen der Höhensumme der wenigstens zwei Empfangsantenneneinheiten durch die Anzahl der wenigstens zwei Empfangsantenneneinheiten und in Kombination mit der Höhe der Basisstationsantenne zu erhalten.

4. Vorrichtung nach Anspruch 1, wobei das Satellitenpositionierungssystem das Globale Positionierungssystem GPS ist.

5. Basisstationsantenne, die die Vorrichtung zum Erfassen von Informationen über die Basisstationsantenne nach einem der Ansprüche 1 bis 4 umfasst.

6. Verfahren zum Erfassen von Informationen über eine Basisstationsantenne, wobei das Verfahren Folgendes umfasst:
Empfangen (21) durch wenigstens zwei Empfangsantenneneinheiten von durch einen Satelliten in einem Satellitenpositionierungssystem gesendeten Satellitensignalen, wobei die wenigstens zwei Empfangsantenneneinheiten und die Basisstationsantenne mit einer vorgegebenen Positionsbeziehung übereinstimmen;
Erhalten (22) von Positionsinformationen der wenigstens zwei Empfangsantenneneinheiten gemäß den Satellitensignalen; und Erhalten von einer Prozesseinheit, die mit der Basisstationsantenne integriert ist, von Positionsinformationen der Basisstationsantenne gemäß den Positionsinformationen der wenigstens zwei Empfangsantenneneinheiten und der vorgegebenen Positionsbeziehung zwischen den wenigstens zwei Empfangsantenneneinheiten und der Basisstationsantenne, wobei die vorgegebene Positionsbeziehung Folgendes umfasst: eine Basislinie, die durch eine Verbindungslinie zwischen den wenigstens zwei Empfangsantenneneinheiten ausgebildet ist, und eine Normale der Basisstationsantenne weisen eine Beziehung eines vorgegebenen eingeschlossenen Winkels auf und ein Wert des vorgegebenen eingeschlossenen Winkels umfasst irgendeinen Winkelwert, der von 0 Grad bis 180 Grad reicht; wobei in diesem Fall das Erhalten von Positionsinformationen der Basislinie gemäß den Satellitensignalen und das Erhalten der Positionsinformationen der Basisstationsantenne gemäß den Positionsinformationen der Basislinie und der vorgegebenen Positionsbeziehung Folgendes umfasst:
Erhalten von Trägerphaseninformationen, Trägerwellenlängeninformationen und Satellitenephemerideninformationen der Satellitensignale durch Parsen der Satellitensignale; und
Erhalten eines Azimuts der Basislinie und/oder eines Steigungswinkels der Basislinie gemäß den Trägerphaseninformationen, den Trägerwellenlängeninformationen und den Satellitenephemerideninformationen; und Erhalten eines Azimuts der Basisstationsantenne gemäß dem Azimut der Basislinie und der vorgegebenen Positionsbeziehung und/oder Erhalten einer Abwärtsneigung der Basisstationsantenne gemäß dem Steigungswinkel der Basislinie und der vorgegebenen Positionsbeziehung, wobei das Erhalten des Azimuts der Basislinie und/oder des Steigungswinkels der Basislinie gemäß den Trägerphaseninformationen, den Trägerwellenlängeninformationen und den Satellitenephemerideninformationen Folgendes umfasst:
Erhalten von Wellenwegen von dem Satelliten zu den wenigstens zwei Empfangsantenneneinheiten gemäß den Trägerphaseninformationen und den Trägerwellenlängeninformationen und Erhalten eines Wellenwegunterschieds zwischen den wenigstens zwei Empfangsantenneneinheiten;
Erhalten von Koordinaten des Satelliten im Geodätischen Weltsystem WGS gemäß den Satellitenephemerideninformationen;
Erhalten von Koordinaten der Basislinie in dem Geodätischen Weltsystem WGS gemäß den Wellenwegen von dem Satelliten zu den wenigstens zwei Empfangsantenneneinheiten, dem Wellenwegunterschied und den Koordinaten des Satelliten in dem Geodätischen Weltsystem WGS;
Umsetzen der Koordinaten der Basislinie im Geodätischen Weltsystem WGS in Koordinaten des Systems der lokalen Ebene LLS;
Erhalten des Azimuts der Basislinie und/oder des Steigungswinkels der Basislinie gemäß den Koordinaten der Basislinie im System der lokalen Ebene LLS, wobei das Erhalten des Azimuts der Basisstationsantenne und/oder der Abwärtsneigung der Basisstationsantenne gemäß dem Azimut der Basislinie und/oder dem Steigungswinkel der Basislinie und der vorgegebenen Positionsbeziehung Folgendes umfasst:
Erhalten des Azimuts der Basisstationsantenne durch Subtrahieren des Werts des vorgegebenen eingeschlossenen Winkels vom Azimut der Basislinie und/oder Erhalten der Abwärtsneigung der Basisstationsantenne durch Subtrahieren des Steigungswinkels der Basislinie von dem Wert des vorgegebenen eingeschlossenen Winkels.

7. Verfahren nach Anspruch 6, wobei das Erhalten von Positionsinformationen der Basislinie gemäß den Satellitensignalen und das Erhalten der Positionsinformationen der Basisstationsantenne gemäß den Positionsinformationen der Basislinie und der vorgegebenen Positionsbeziehung Folgendes umfassen:
Erhalten von Informationen des Längengrads und des Breitengrads und/oder Höheninformationen der wenigstens zwei Empfangsantenneneinheiten durch Parsen der Satellitensignale; und
Erhalten von Informationen des Längengrads und des Breitengrads und/oder Höheninformationen der Basisstationsantenne gemäß den Informationen des Längengrads und des Breitengrads und/oder der Höheninformationen der wenigstens zwei Empfangsantenneneinheiten und der vorgegebenen Positionsbeziehung.

8. Verfahren nach Anspruch 7, wobei die vorgegebene Positionsbeziehung Folgendes umfasst: die wenigstens zwei Empfangsantenneneinheiten befinden sich in einem oberen Abschnitt der Basisstationsantenne und die Höhe der Basisstationsantenne ist die Befestigungshöhe; wobei das Erhalten der Informationen des Längengrads und des Breitengrads und/oder der Höheninformationen der Basisstationsantenne gemäß den Informationen des Längengrads und des Breitengrads und/oder den Höheninformationen der wenigstens zwei Empfangsantenneneinheiten und der vorgegebenen Positionsbeziehung Folgendes umfasst:
Erhalten der geographische Länge der Basisstationsantenne durch Teilen der Summe der geographischen Längen der wenigstens zwei Empfangsantenneneinheiten durch die Anzahl der wenigstens zwei Empfangsantenneneinheiten; und Erhalten der geographische Breite der Basisstationsantenne durch Teilen der Summe der geographischen Länge und der geographischen Breite der wenigstens zwei Empfangsantenneneinheiten durch die Anzahl der wenigstens zwei Empfangsantenneneinheiten; und
Erhalten der Befestigungshöhe der Basisstationsantenne durch Teilen der Höhensumme der wenigstens zwei Empfangsantenneneinheiten durch die Anzahl der wenigstens zwei Empfangsantenneneinheiten und in Kombination mit der Höhe der Basisstationsantenne.

9. Verfahren nach Anspruch 6, wobei das Satellitenpositionierungssystem das Globale Positionierungssystem GPS ist.

## Revendications

1. Appareil destiné à l'acquisition d'informations concernant une antenne de station de base, où l'appareil est intégré à l'antenne de station de base, et l'appareil comprenant :
au moins deux unités d'antenne de réception (11), configurées pour recevoir des signaux de satellite envoyés par un satellite dans un système de positionnement par satellite, où les au moins deux unités d'antenne de réception (11) et l'antenne de station de base s'accordent avec une relation de position prédéfinie ; et
une unité de traitement (12), configurée pour obtenir des informations de position des au moins deux unités d'antenne de réception (11) en fonction des signaux de satellite, et pour obtenir des informations de position de l'antenne de station de base en fonction des informations de position des au moins deux unités d'antenne de réception (11) et de la relation de position prédéfinie entre les au moins deux unités d'antenne de réception (11) et l'antenne de station de base, où la relation de position prédéfinie comprend qu'une ligne de base formée par une ligne de connexion entre les au moins deux unités d'antenne de réception (11) et une normale à l'antenne de station de base ont une relation d'un angle inclus prédéfini, et qu'une valeur de l'angle inclus prédéfini comprend toute valeur d'angle allant de 0 degré à 180 degrés ; et l'unité de traitement (12) comprend :
une première sous-unité de traitement, configurée pour obtenir des informations de phase de la porteuse, des informations de longueur d'onde de la porteuse et des informations d'éphémérides de satellite des signaux de satellite en analysant les signaux de satellite ; et
une seconde sous-unité de traitement, configurée pour obtenir un azimut de la ligne de base et/ou un angle de tangage de la ligne de base en fonction des informations de phase de la porteuse, des informations de longueur d'onde de la porteuse et des informations d'éphémérides du satellite, et pour obtenir un azimut de l'antenne de station de base en fonction de l'azimut de la ligne de base et de la relation de position prédéfinie et/ou une inclinaison vers le bas de l'antenne de la station de base selon l'angle de tangage de la ligne de base et la relation de position prédéfinie, respectivement, où la deuxième sous-unité de traitement est spécifiquement configurée pour :
obtenir, en fonction des informations de phase de la porteuse et des informations de longueur d'onde de la porteuse, des trajets d'ondes depuis le satellite vers les au moins deux unités d'antenne de réception (11), et obtenir une différence des trajets d'ondes entre les au moins deux unités d'antenne de réception (11) ;
obtenir, en fonction des informations sur les éphémérides du satellite, les coordonnées du satellite dans le système géodésique mondial WGS ;
obtenir, en fonction des trajets d'ondes du satellite vers les au moins deux unités d'antennes de réception (11), de la différence des trajets d'ondes et des coordonnées du satellite dans le système géodésique mondial WGS, les coordonnées de la ligne de base dans le système géodésique mondial WGS ; ;
convertir les coordonnées de la ligne de base dans le système géodésique mondial WGS en coordonnées dans le système de niveau local LLS ;
obtenir, en fonction des coordonnées de la ligne de base dans le système de niveau local LLS, l'azimut de la ligne de base et/ou l'angle de tangage de la ligne de base ;
obtenir, en soustrayant la valeur de l'angle inclus prédéfini de l'azimut de la ligne de base, l'azimut de l'antenne de la station de base, et/ou
obtenir, en soustrayant l'angle de tangage de la ligne de base de la valeur de l'angle inclus prédéfini, l'inclinaison vers le bas de l'antenne de la station de base, respectivement.

2. Appareil selon la revendication 1, dans lequel l'unité de traitement (12) comprend :
une première sous-unité de traitement, configurée pour obtenir des informations de longitude et de latitude et/ou des informations de hauteur des au moins deux unités d'antenne de réception en analysant les signaux de satellite ; et
une seconde sous-unité de traitement, configurée pour obtenir des informations de longitude et de latitude et/ou des informations de hauteur de l'antenne de la station de base en fonction des informations de longitude et de latitude et/ou des informations de hauteur des au moins deux unités d'antenne de réception et de la relation de position prédéfinie.

3. Appareil selon la revendication 2, dans lequel la relation de position prédéfinie comprend que les au moins deux unités d'antenne de réception sont situées dans une partie supérieure de l'antenne de la station de base, et la hauteur de l'antenne de la station de base est la hauteur de montage ; et la seconde sous-unité de traitement est spécifiquement configurée pour :
obtenir, en divisant la somme des longitudes des au moins deux unités d'antenne de réception par le nombre des au moins deux unités d'antenne de réception, la longitude de l'antenne de la station de base ; et obtenir, en divisant la somme des longitudes et des latitudes des au moins deux unités d'antenne de réception par le nombre des au moins deux unités d'antenne de réception, la latitude de l'antenne de la station de base ; et
obtenir, en divisant la somme des hauteurs des au moins deux unités d'antenne de réception par le nombre des au moins deux unités d'antenne de réception et, en combinaison avec la hauteur de l'antenne de la station de base, la hauteur de montage de l'antenne de la station de base.

4. Appareil selon la revendication 1, dans lequel le système de positionnement par satellite est le système de positionnement mondial GPS.

5. Antenne de station de base, comprenant l'appareil pour acquérir des informations sur l'antenne de station de base selon l'une quelconque des revendications 1 à 4.

6. Procédé destiné à l'acquisition d'informations concernant une antenne de station de base, où le procédé comprend les étapes suivantes :
recevoir (21), par l'intermédiaire d'au moins deux unités d'antenne de réception, des signaux de satellite envoyés par un satellite dans un système de positionnement par satellite, où les au moins deux unités d'antenne de réception et l'antenne de station de base s'accordent avec une relation de position prédéfinie ; et
obtenir (22), en fonction des signaux de satellite, des informations de position des au moins deux unités d'antenne de réception ; et obtenir d'une unité de traitement qui est intégrée à l'antenne de la station de base, en fonction des informations de position des au moins deux unités d'antenne de réception et de la relation de position prédéfinie entre les au moins deux unités d'antenne de réception et l'antenne de la station de base, des informations de position de l'antenne de la station de base, où la relation de position prédéfinie comprend qu'une ligne de base formée par une ligne de connexion entre les au moins deux unités d'antenne de réception et une normale à l'antenne de la station de base ont une relation d'angle inclus prédéfini, et qu'une valeur de l'angle inclus prédéfini comprend toute valeur d'angle allant de 0 degré à 180 degrés; dans ce cas, l'obtention, en fonction des signaux de satellite, des informations de position de la ligne de base, et l'obtention, en fonction des informations de position de la ligne de base et de la relation de position prédéfinie, des informations de position de l'antenne de la station de base comprennent les étapes suivantes :
obtenir, par l'analyse des signaux de satellite, des informations de phase de la porteuse, des informations de longueur d'onde de la porteuse et des informations d'éphémérides de satellite des signaux du satellite ; et
obtenir, en fonction des informations de phase de la porteuse, des informations de longueur d'onde de la porteuse et des informations d'éphémérides de satellite, un azimut de la ligne de base et/ou un angle de tangage de la ligne de base ; et
obtenir un azimut de l'antenne de la station de base en fonction de l'azimut de la ligne de base et la relation de position prédéfinie et/ou obtenir une inclinaison vers le bas de l'antenne de la station de base en fonction de l'angle de tangage de la ligne de base et de la relation de position prédéfinie, respectivement,
où l'obtention, en fonction des informations de phase de la porteuse, des informations de longueur d'onde de la porteuse et des informations d'éphémérides de satellite, l'azimut de la ligne de base et/ou l'angle de tangage de la ligne de base comprend les étapes suivantes :
obtenir, en fonction des informations de phase de la porteuse et des informations de longueur d'onde de la porteuse, des trajets d'ondes depuis le satellite vers les au moins deux unités d'antenne de réception, et obtenir une différence des trajets d'ondes entre les au moins deux unités d'antenne de réception ;
obtenir, en fonction des informations sur les éphémérides du satellite, les coordonnées du satellite dans le système géodésique mondial WGS ;
obtenir, en fonction des trajets d'ondes du satellite vers les au moins deux unités d'antenne de réception, de la différence des trajets d'ondes et des coordonnées du satellite dans le système géodésique mondial WGS, les coordonnées de la ligne de base dans le système géodésique mondial WGS ;
convertir les coordonnées de la ligne de base dans le système géodésique mondial WGS en coordonnées dans le système de niveau local LLS ; et
obtenir, en fonction des coordonnées de la ligne de base dans le système de niveau local LLS, l'azimut de la ligne de base et/ou l'angle de tangage de la ligne de base, où l'obtention, en fonction de l'azimut de la ligne de base et/ou de l'angle de tangage de la ligne de base et de la relation de position prédéfinie, de l'azimut de l'antenne de la station de base et/ou de l'inclinaison vers le bas de l'antenne de la station de base comprend les étapes suivantes :
obtenir, en soustrayant la valeur de l'angle inclus prédéfini de l'azimut de la ligne de base, l'azimut de l'antenne de la station de base, et/ou
obtenir, en soustrayant l'angle de tangage de la ligne de base de la valeur de l'angle inclus prédéfini, l'inclinaison vers le bas de l'antenne de la station de base, respectivement.

7. Procédé selon la revendication 6, dans lequel l'obtention, en fonction des signaux de satellite, des informations de position de la ligne de base, et l'obtention, en fonction des informations de position de la ligne de base et de la relation de position prédéfinie, des informations de position de l'antenne de la station de base comprennent les étapes suivantes :
obtenir, en analysant les signaux de satellite, des informations de longitude et de latitude et/ou des informations de hauteur des au moins deux unités d'antenne de réception ; et
obtenir, en fonction des informations de longitude et de latitude et/ou des informations de hauteur des au moins deux unités d'antenne de réception et de la relation de position prédéfinie, des informations de longitude et de latitude et/ou des informations de hauteur de l'antenne de la station de base.

8. Procédé selon la revendication 7, dans lequel la relation de position prédéfinie comprend que les au moins deux unités d'antenne de réception sont situées dans une partie supérieure de l'antenne de la station de base, et la hauteur de l'antenne de la station de base est la hauteur de montage ; et l'obtention, en fonction des informations de longitude et de latitude et/ou des informations de hauteur des au moins deux unités d'antenne de réception et de la relation de position prédéfinie, des informations de longitude et de latitude et/ou des informations de hauteur de l'antenne de la station de base comprennent les étapes suivantes :
obtenir, en divisant la somme des longitudes des au moins deux unités d'antenne de réception par le nombre des au moins deux unités d'antenne de réception, la longitude de l'antenne de la station de base ; et obtenir, en divisant la somme des longitudes et des latitudes des au moins deux unités d'antenne de réception par le nombre des au moins deux unités d'antenne de réception, la latitude de l'antenne de la station de base ; et
obtenir, en divisant la somme des hauteurs des au moins deux unités d'antenne de réception par le nombre des au moins deux unités d'antenne de réception et, en combinaison avec la hauteur de l'antenne de la station de base, la hauteur de montage de l'antenne de la station de base.

9. Procédé selon la revendication 6, dans lequel le système de positionnement par satellite est le système de positionnement mondial GPS.
